# EUROPEAN PATENT APPLICATION

(11) **EP 4 723 597 A1**
(43) Date of publication of application: **08.04.2026**
(21) Application number: 24740485.8
(22) Date of filing: 30.05.2024
(51) Int. Cl.: H04L 67/06, B64G 1/10, H04B 7/185, G06N 20/00, G06V 20/13, H04L 67/12

(54) **SATELLITE AND GROUND STATION SYSTEM FOR COLLECTING AND MONITORING EARTH-BASED DATA**

(30) Priority: 30.05.2023 US 202363469637 P
(71) Applicant: Xoople, S.L., 28020 Madrid (ES)
(72) Inventor: PIRONDINI, Fabrizio, 28020 Madrid (ES); RITCHIE, Jamie, 28020 Madrid (ES)
(74) Representative: Pons IP
(86) International application number: PCT/ES2024/070335
(87) International publication number: WO 2024/246399

(57) **Abstract**

Systems and methods for managing Earth-based data. One or more satellites in a low-Earth, sun-synchronous orbit is provided and are in communication with multiple ground stations. The satellites overfly and gather data from target areas and are able to target any area on Earth. The data is gathered daily and from effectively the same altitude, attitude, viewpoint, and time of day to provide consistency in the circumstances surrounding the data gathering. The gathered data is then downloaded to one or more ground stations. Once downloaded, the data is then uploaded to a cloud-based storage system for later analysis and processing as desired.

## Description

### TECHNICAL FIELD

The present invention relates to systems for imaging the Earth. More specifically, the present invention relates to systems and methods for providing visual and/or multispectral images of various parts of the Earth and providing analysis results and conclusions based on these images.

### BACKGROUND

The early 21st century has had an explosion in interest and activity in space exploration. The entry of private enterprise has made space exploration and space-based industry the next frontier for business.

Currently, one can acquire detailed images of the Earth that used to be the domain of only the richest countries. Individuals and businesses can see satellite images of select areas of the earth for free using any number of online services.

However, even with such seemingly unprecedented access to satellite imagery, these images are typically not provided with any analysis nor with any conclusions based on the images. As well, the images are typically static and are simply snapshots at a fixed point in time. It is difficult to obtain and compare images of areas as they change over time. Similarly, there is limited capacity to obtain new images and limited control over when images or data is gathered by satellites for an area or when one can expect new images or data for an area. Finally, while most areas of the earth can be imaged, there is no provision for repeated and consistent images of the earth's entire landmass on a daily basis.

Moreover, to date, processing of satellite imagery has generally required some human involvement which necessarily limits the speed and volume of image data processing. There is, therefore, a need for systems and methods which provide the capabilities missing from current satellite-based imaging and data gathering systems and which take full advantage of modern technological advancements.

### SUMMARY

The present invention provides systems and methods for managing Earth-based data. One or more satellites in a low-Earth, sun-synchronous orbit are provided and are in communication with multiple ground stations. The satellites overfly and gather data from target areas and are able to target any area on Earth. The data is gathered daily and from effectively the same altitude, attitude, viewpoint, and time of day to provide consistency in the circumstances surrounding the data gathering. The gathered data is then downloaded to one or more ground stations. Once downloaded, the data is then uploaded to a cloud-based storage system for later analysis and processing as desired.

In one aspect, this document discloses a method for managing Earth-derived data, the method comprising: receiving packetized Earth-derived data from at least one satellite in orbit; reassembling said data; uploading said data to a cloud-based database for analysis and distribution; wherein: said at least one satellite is in a low-Earth, sun-synchronous orbit; for each area scanned by said at least one satellite, said data is gathered based on a regular schedule, such that each time said data is gathered, said data is gathered from a same altitude, a same angle, a same view towards said area, and at a same time of day; and said packetized Earth-derived data is received by at least one ground station.

In another aspect, this document discloses a satellite for use with an Earth-monitoring system, the system comprising: a plurality of satellites in low-Earth, sun-synchronous orbit, said plurality of satellites being positioned in a same orbital plane; a plurality of ground stations for receiving data from said plurality of satellites; a cloud-based database for receiving data from said plurality of ground stations; and a cloud-based data processing system for analyzing data from said plurality of ground stations, wherein, for each area scanned by said at least one satellite, said data is gathered based on a regular schedule, such that each time said data is gathered, said data is gathered from a same altitude, a same angle, a same view towards said area, and a same time of day.

In another aspect, this document discloses a ground station for use with an Earth-monitoring system, the system comprising: a plurality of satellites in low-Earth, sun-synchronous orbit, said plurality of satellites being positioned in a single orbital plane; a plurality of ground stations for receiving data from said plurality of satellites; a cloud-based database for receiving data from said plurality of ground stations; and a cloud-based data processing system for analyzing data from said plurality of ground stations, wherein, for each area scanned by said at least one satellite, said data is gathered based on a regular schedule, such that each time said data is gathered, said data is gathered from a same altitude, a same angle, a same view towards said area, and a same time of day.

### BRIEF DESCRIPTION OF THE DRAWINGS

The embodiments of the present invention will now be described by reference to the following figures, in which identical reference numerals in different figures indicate identical elements and in which:
**FIGURE 1** is a block diagram of a system according to one aspect of the present invention;
**FIGURE 2** is a map showing a ground station network (GSN) according to an embodiment of the invention;
**FIGURE 3** is a diagram of a 16-satellite constellation according to one embodiment of the invention;
**FIGURE 4** is a schematic showing targeted data acquisition over an Area of Interest (AOI);
**FIGURE 5A** is a fresh pixel probability map of the globe over a 14-day period, according to an embodiment of the invention;
**FIGURE 5B** is a fresh pixel probability map of the globe over a 21-day period;
**FIGURE 6** is a flowchart detailing the steps in a method according to another aspect of the present invention; and
**FIGURE 7** is a diagram listing some specific uses and areas for the various aspects of the present invention.

### DETAILED DESCRIPTION

In some implementations, the present invention takes advantage of modem technologies and incorporates these to result in the inventive system of the present invention. Accordingly, the present invention may incorporate features that include or take advantage of cloud storage, on-demand processing, artificial intelligence (AI), machine learning (ML) and broadband Internet access. The present invention takes advantage of these and other technologies to store, analyze, process, access and transfer large volumes of data and data sets as necessary.

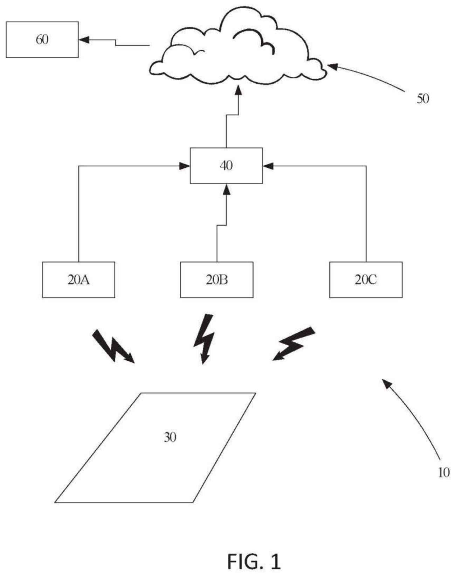

Referring to Figure 1, a schematic block diagram of a system according to one aspect of the invention is illustrated. As can be seen, the system 10 includes multiple satellites 20A, 20B, 20C, each of which gathers images and data of Earth areas 30. The data gathered is then downloaded to at least one ground station 40. The ground station 40, after receiving the data, then uploads the data to a cloud storage 50. The cloud storage 50 then processes the data to produce reports, images, and other usable information. This information is then sent to multiple users 60. It should be clear that the system is a general use system for gathering, processing, and distributing satellite-gathered, Earth-centric data.

In one aspect, the system gathers multispectral data from specific areas of the Earth on a fixed schedule. That is, the satellite constellation preferably maintains a sun-synchronous, frozen, and repeating orbit, thereby enabling optimal power, thermal conditions, and illumination conditions. The orbit selected for the satellite constellation preferably also provides relatively uniform data gathering conditions and a repeatable coverage pattern / coverage matrix after a characteristic time frame *(i.e.,* after the orbit repeat cycle). The orbit repeat cycle is the time for one satellite in the constellation to cover the Earth, i.e., to return to / revisit a specific point on Earth's surface. For example, the orbit repeat cycle for a constellation of 14 satellites may be 14 days. In such an embodiment, data from a specific ground point would be gathered once every 24 hours by a different one of the 14 satellites *(i.e.,* on Day 1, data would be gathered by Satellite A; on Day 2, data would be gathered by Satellite B; etc.). Each satellite would gather its data from that ground point from effectively the same altitude, the same angle, the same viewpoint, and at the same time of day. After the 14-day cycle *(i.e.,* on Day 15), the pattern would begin again with Satellite A. This approach generates a daily set of data gathered from the same data gathering conditions for each specific area targeted for data gathering. Of course, a 14-day cycle and a 14-satellite constellation are merely one example, and more or fewer satellites may be used in the system of the invention.

Once the data is gathered, the multispectral data can then be processed using any suitable means and technologies including automated and/or autonomous AI/ML processing. The multispectral data can be automatically preprocessed to result in analysis-ready data (ARD) and/or AI/ML-ready data (AIRD). As would be understood, the uniform data gathering conditions described above may mean that preprocessing (and/or further processing) may be significantly more efficient than in conventional systems. That is, the present system may not have to adjust for / account for a number of different gathering conditions (e.g., zenith angle, time of day, etc) before analysis on useful metrics can be performed.

Analyses of such data can then be executed in manners that depend on the target consumer's projected industry or field. As such, the multispectral data can be processed to produce information that may be specifically geared towards such disparate fields as agriculture, mining, climatology, urban planning, logistics, cartography, finance, military or geopolitical intelligence, forestry, architecture, engineering and construction, mapping, trading and finance, ESG (environmental, social, and governance) and carbon monitoring/verification, civil government, general analytics, insurance, renewables and energy, climate and disaster response, etc., etc. In one implementation, for each targeted area, data is gathered across 11 electromagnetic (EM) frequency ranges / spectral bands. These spectral bands may include various ranges in the VNIR (Visible and Near InfraRed) spectrum, including those that relate to band categories such as Aerosol, Red-Edge(s), NIR (Near InfraRed), Water Vapour, Cirrus, etc. As should be understood, the system may use any suitable instrumentation and/or may gather information from any desired spectral band. In some implementations, the electromagnetic frequencies at which the data is gathered are sufficiently similar to the European Space Agency mission designated SENTINEL-2 that data gathered can be autonomously compared with SENTINEL-2 gathered historical data.

In operation, the satellites are preferably in an orbit such that all areas of the Earth are available for data gathering once every 24 hours. As should be understood, of course, the data may be gathered once every 48 hours, 36 hours, twice per day or at any other suitable interval depending on the embodiment. Again, for various configurations of the constellation, a sun-synchronous, repeating, and frozen orbital plane allows for automated tasking for extended periods (e.g., days, weeks, or months and theoretically up to full mission life).

Multiple ground stations (GS) are available to download the data from the satellites. These ground stations may be located strategically around the Earth to minimize the time gap between capture of data from satellites and the availability of such data to users. As can be imagined, ground stations are placed at different locations to provide suitable coverage such that satellites are able to download gathered data to the ground stations. Given that a large part of the Earth is covered by water/oceans, there may not be ground stations for downloading data when a satellite overflies large oceans. Of course, data gathered when no ground stations are available is stored on the satellite until a ground station is available to receive satellite-gathered data. It should also be clear that, if a satellite is not done transferring data to a ground station and the ground station is about to lose coverage of the satellite, the satellite can be handed off to the next ground station that has coverage. Such handing off processes can be used to ensure that there is sufficient ground station coverage for the satellites such that gathered data is properly transmitted to the ground stations. Preferably, there should be minimal time elapsed from when data is gathered by a satellite to when that gathered data is available to a user. In some implementations, this minimal time may be as little as 5 minutes from when data is gathered by a suitable satellite.

It should also be clear that different ground stations may simultaneously receive data from multiple satellites. Also, depending on the placement of the ground stations, downloads from satellites to ground stations may need to be carefully scheduled to ensure proper coverage to allow satellites suitable time and resources to transfer their data. As can be imagined, placement of ground stations may be difficult for some geographical areas and, as such, when combined with the placement of ground stations in predominantly ocean areas, careful planning for data transfers from satellites to ground stations may be necessary for some ground stations. To ensure that ground stations are able to send/transmit data to and from satellites (with some or all such ground stations providing instructions for satellites to image-specific areas), each ground station may be equipped with 2 or more antennas dedicated to satellite communications. Preferably, there are a sufficient number of ground stations to provide low latency between ground stations and satellites, even given the potential issues from difficulties in placing ground stations in certain geographical areas. Ground stations may, from time to time, provide satellites with targeting data to ensure that satellites gather data from targeted areas and not all areas on the Earth. However, as should be understood, not all ground stations are required to have upload capabilities. For example, in one implementation, only one ground station provides satellites with targeting data while the other ground stations only receive satellite data *(i.e.,* the other GSs are download-only).

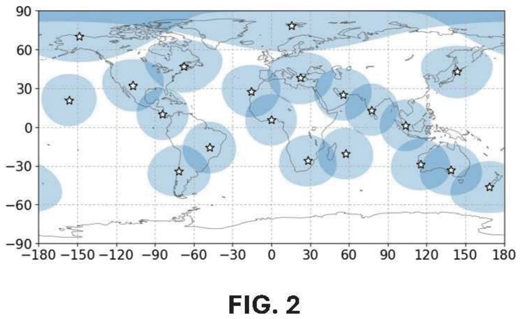

The ground stations (GS) may form a ground station network (GSN). The GSN preferably optimizes data latency and download capacity. **Figure** 2 shows a map of a potential GSN according to one implementation of the invention. As can be seen, each ground station has a strategic location to optimize data latency in the context of a descending sun-synchronous orbit. Optimizing download capacity may be ensured by, for example, positioning at least two separate antennas at each GS, with each antenna dedicated to receiving only data from the satellites of the subject constellation and not any other satellites. Some ground stations, such as that depicted on the far north island of Svalbard (near the North Pole), may have three or more antennas for robustness and to optimize download capacity. (That is, additional antennas may be provided for redundancy, increased downloading capacity, and/or to communicate with spare satellites, especially in remote or difficult-to-access areas or areas of strategic importance. Note that Svalbard is both remote and strategic, as every satellite following a sun-synchronous orbit will overfly the island.) As can be seen, the GSN in Figure 2 is primarily configured to minimize the time elapsed between a satellite gathering data and having that gathered data available to a user, particularly with respect to data relating to strategic ocean / maritime coastlines and strategic land areas. That is, many of the ground stations are relatively close to an ocean or seacoast, and there are no ground stations in the central Eurasian landmass. Of course, this does not mean that the central Eurasian landmass or any other landmass cannot be imaged by satellites in communication with the GSN of Figure 2. Rather, data from such regions might simply take longer to be downloaded at a ground station and thus not be processed or available to users as quickly as coastline data in the Figure 2 implementation. Further, of course, nothing in Figure 2 is intended to restrict the placement of ground stations to only the identified number or locations.

The locations for each ground station in a GSN may be selected based on the characteristics of the orbit of said plurality of satellites. Further, the number of GS used in any implementation may be based on the data collection capacity of the specific satellites used, the data collection speed of the specific satellites used, and/or other similar parameters relevant to the specific implementation.

Calculations and simulations have shown that, in one implementation, a constellation of 7 satellites that are in a sun-synchronous low-Earth orbit can provide sufficient coverage for the Earth such that all areas of the Earth are available for data gathering with two days. Other implementations may use an 8-satellite constellation, while still other implementations may use a 16-satellite constellation that is in a similar sun-synchronous low-Earth orbit, as further detailed below. The number of satellites used in a constellation depends on the specific swath width of the onboard optical instruments. That is, constellations with fewer satellites (such as 8 satellites) may gather and provide data at the same frequency as constellations with more satellites *(e.g.,* 16 satellites), provided the swath width of the instruments is sufficient.

As noted above, data gathering may include image gathering but, more importantly, includes gathering multispectral data. Either constellation preferably allows for each and every area of the Earth to have data gathered by a satellite once every 24 hours from the same satellite altitude, attitude, viewpoint, and time of day. This ensures consistency in terms of the satellite circumstances surrounding each data set gathered for each targeted area. Accordingly, each data set gathered for each targeted area will be gathered under the same circumstances every time. This uniformity of data allows for automated (*i.e.,* no humans in the loop) processing, storage, and analysis, including creating analysis-ready data (ARD) and AI/ML-ready data (AIRD) for multiple use cases.

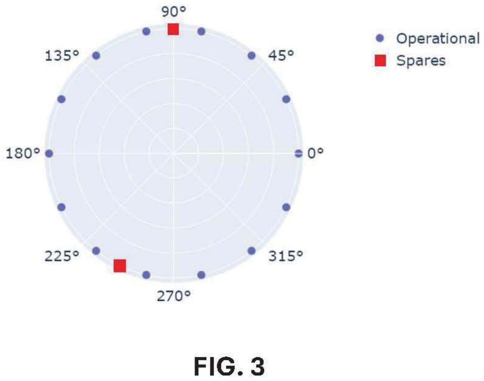

In one configuration, depicted in **Figure 3**, a 16-satellite constellation is used. This configuration preferably comprises 14 operational satellites (represented in Figure 3 by circles) and two in-orbit spare satellites (represented in Figure 3 by squares). In the event of a problem or failure with one of the operational satellites, one of the spares can be tasked as a replacement. As should be understood, the spare satellites may be physically and instrumentally the same as one or more of the operational satellites or may be physically or instrumentally different. It should also be understood that more or fewer than two spare satellites can be used, depending on the implementation.

The operational satellites are preferably uniformly distributed in an orbit around the globe, in a single orbital plane. For example, when there are 14 operational satellites, each operational satellite would be located approximately 25.7° from each of its neighbouring operational satellites. The spare satellites are preferably located more than 90° from each other, to enable broader replacement coverage if necessary. For example, in Figure 3, the two spare satellites are located at 90° and at 244.3°, *i.e.,* 154.3° from each other.

The orbit(s) of the satellite constellation preferably account for / are adjusted to account for the presence of other constellations, mega-constellations, and/or known or known to be planned spacecraft. That is, the constellation orbit preferably avoids at least the altitudes and inclinations of known mega-constellations (such as, without limitation, the Starlink^{™} and Kuiper^{™} constellations), to thereby reduce constellation-wide collision risk. In one implementation, the selected orbit is within a narrow band between known mega-constellations, which other satellite constellations are therefore less likely to select.

Additionally, the relative positioning of the satellites within the constellation is preferably optimized to reduce the impacts of manufacturing errors in the instrumentation. For example, satellite positioning may ensure that spacecraft with similar manufacturing errors are not positioned next to each other. In one implementation, should two spacecraft be known to have more than a pre-assessed error margin in field of view, those two spacecrafts would be positioned far from each other, so that their fields of view do not overlap, or leave any gaps, even with the error margin. That is, the satellite positioning may account for the field of view of the optical instrument of each satellite. This may include the exact actual manufactured field of view, and typically account for tolerance variations.

Each of the satellites in the constellation may have features that optimize its capabilities. In order to optimize data collection, each satellite may be equipped with on-board active swath control to enable swath cropping to minimize overlap with other satellites and along edges of an Area of Interest. For example, swath cropping (controlling which areas are imaged, by controlling distinct imaging modules on the satellite(s)) may be used to ensure that data of a specific area is only collected when the observation zenith angle is within a certain limit. For example, depending on the embodiment, the observation zenith angle may be less than 20 degrees or less than 10 degrees.

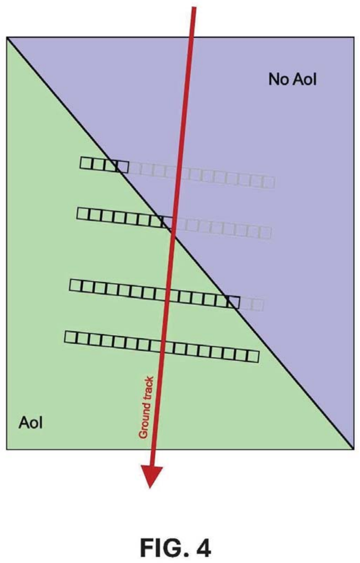

Further, swath cropping is preferably controllable such that specific regions / Areas of Interest may be imaged while other regions / areas (*i.e.,* regions / areas that are not currently of interest) are not observed. For example, a satellite in the constellation may comprise a VNIR instrument (*i.e.,* an instrument capable of imaging in both the Visible and Near InfraRed spectra) that comprises multiple modules / sensors dies which can be individually toggled to gather data or to not gather data (*i.e.,* to be 'ON' or to be 'OFF'). Other instruments that may be mounted on the satellite(s), including but not limited to SWIR (ShortWave InfraRed) and instruments for other spectra, may be controlled or controllable in a similar manner. Of course, any particular satellite may have any desired instrument or combination of instruments. The various dies/modules/areas of the sensor may be pre-programmed to be automatically toggled on or off depending on the latitude of the satellite and/or depending on the area being overflown. One example of such swath cropping is shown in **Figure 4****.**

In Figure 4, the bottom left of the image is an Area of Interest (AoI) while the top right of the image is not an Area of Interest. As the satellite moves from top to bottom, overflying the area, it can be seen that more images are collected *(i.e.,* there are more heavily outlined boxes lower in the image). It should of course be understood that Figure 4 is simply a schematic and that the lines depicted do not necessarily correspond to any actual boundaries or images collected during flight.

Further, swath control can be implemented to reduce overlap between swaths, not simply to focus on specific AoIs. At the edges of a swath (the edges being algorithmically determined), specific sensor dies / areas on the sensor are toggled off to reduce the likelihood of overlap with the swath of other satellites. This may be particularly noticeable when overflying either Pole. In contrast, as a satellite approaches the Equator, there will be less overlap between swaths and thus more sensor dies can gather data. Swath cropping to reduce overlap can theoretically provide up to about a 40% reduction in data collected, per spacecraft, which results in substantially lower data storage, transfer, and processing requirements and also allows for lighter-weight spacecraft.

In addition, swath control procedures may comprise adjusting / toggling specific areas of the sensor to collect only a subset of spectra, with each subset is based on the position of the satellite with respect to the Earth.

As well, in some embodiments, the constellation comprises satellites capable of operating in multiple modes, such as a Land Observation Mode and a Maritime Observation Mode. Data gathered in different modes may be collected in different spectra, in one or more different subsets of spectra, at different geometric resolutions, and so on. Additionally, more or less later processing may be performed on data gathered in different mode. Further, different modes may create smaller or larger data files. As should be understood, smaller data files can minimize the time elapsed from when data is gathered by a satellite to when that gathered data is available to a user. In some embodiments, further, the imaging instruments can operate in multiple modes simultaneously. For example, when imaging coastlines (which comprise both land and a body of water), both a Land Observation Mode and a Maritime Observation Mode may be simultaneously operative, such that images of the land are gathered using the Land Observation Mode and images of the body of water are gathered using the Maritime Observation Mode.

Data acquisitions may be autonomously stored as files and may then be autonomously downloaded according to autonomously labelled downlink priority levels. Detector lines on a satellite sensor may be programmed to precisely alter configurations to produce multiple types of data product *(i.e.,* differing multispectral recordings such as for a land product and for a maritime product) and dynamically change as the path of the satellite progresses over an Area of Interest. Once the satellite-gathered data has been downloaded to one or more ground stations, the data sets are then uploaded to an online cloud storage system. The cloud storage system stores this data for immediate or later analysis. In one implementation the cloud storage system is co-located with an on-demand cloud processing system. It should be clear that, depending on the implementation, the ground stations may perform pre-processing of the data sets prior to uploading the data sets to the cloud storage system. Such pre-processing may take the form of aligning the data sets, ensuring that the data sets are complete, or that the data sets are properly formatted. Once pre-processing is complete, the ground station then uploads the data sets to the cloud storage system. It should be clear that, depending on the implementation, the autonomously labelled downlink priority levels can be adjusted from time to time and over time to reflect, for example, changing geopolitical conditions and correspondingly changing geographical areas of interest.

Preferably, the cloud storage system is readily available to all the ground stations to ensure that the data sets are properly uploaded for both storage and processing. In one implementation at least one of the ground stations is co-located with cloud storage and processing facilities. Once data sets have been uploaded, the data sets are processed to produce analysis-ready data (ARD) and/or AI-ready data (AIRD). In one implementation, the ARD/AIRD may take the form of visual images derived from/created from the data sets uploaded to the cloud storage system. The visual images generated/derived from the data sets can then be transmitted/provided to clients/users for their use. These visual images can also be analyzed to provide insights/conclusions based on the analysis. In one implementation, the ARD/AIRD facilitates autonomous cloud masking. In another implementation, the ARD/AIRD may take the form of written reports transmitted/provided to clients/users for their use. In another implementation, AIRD facilitates text-based queries relating to changes on the surface of the Earth, such relating to estimated crop yield in an area of interest, via a chat interface of a large language model.

It should also be clear that the data stored in the online cloud storage system may be processed by a suitable data processing system, also preferably cloud based. Time dependent processing, such as processing that takes into account data sets for the same target area but taken at different points in time, may be applied to these cloud stored data sets. Analyses and comparisons between these different data sets for the same target area can be carried out to determine how the target area changes over time and to determine what those changes may mean. Reports may be generated based on the comparisons and on the analyses and the reports may be distributed to users instead of the data gathered.

Additionally, the system of the present invention may automatically generate metadata or additional analysis tools for use in analyzing the gathered data. Such metadata and other tools can be used by automated assessment/analysis models, as described elsewhere herein, and/or can be provided directly to human reviewers. Such metadata and/or tools may be created using trained artificial intelligence or machine learning models, generally operating on the cloud-based server or cloud platform.

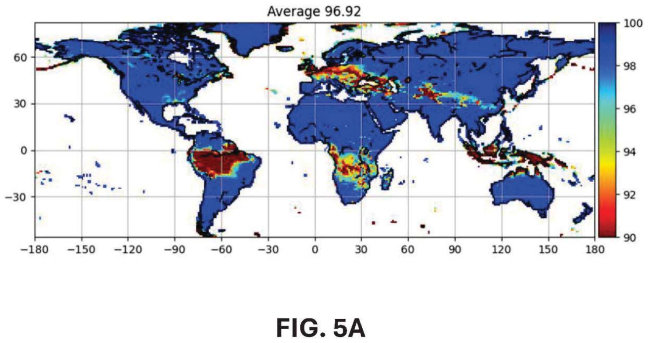

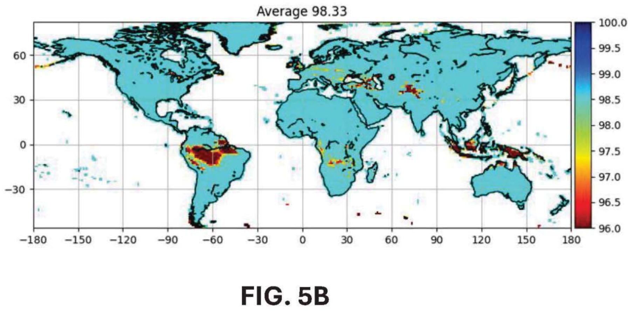

As one non-limiting example, the system may generate "fresh pixel probability" maps for specific regions and/or for the globe. The "fresh pixel probability" for an area is the likelihood that a corresponding pixel in a gathered image of that area was "fresh", *i.e.,* cloud-free, over the time of interest. **Figure 5A****,** for example, is a heatmap showing the probability of fresh pixels for certain areas over a 14-day period. **Figure 5B****,** similarly, is a heatmap showing the probability of fresh pixels for certain areas over a 21-day period. As can be seen, the probability of fresh pixels in Figure 5B is generally higher than in Figure 5A, worldwide. Such a map can be created by an artificial intelligence or machine learning model trained to compute fresh pixel probability based on inputs such as the area of coverage, the date(s) of interest, the observation time span, and, in some embodiments, previously gathered data.

In terms of the processing undertaken for the different data sets stored in the cloud storage system, the processing may use various types of artificial intelligence as well as machine learning. Suitably trained artificial intelligence or machine learning analysis modules may be applied to the data to detect early signs of potential changes that may be useful to users. As an example, satellite-based imagery of forests that have had multiple days of high dryness and high temperatures can be used to provide early warnings of potential forest fires. Similarly, data sets of images of agricultural fields may be analyzed to determine the optimum timing for planting, fertilization, watering, pesticide application and/or harvesting of specific crops. The data provided by the system may be accessible by way of, in one example, a mobile application that allows farmers to subscribe to receive a daily data stream and imagery of their fields on their mobile device. In another example, the data may be used with or in conjunction with the training of large language models to thereby allow for a wide range of natural language queries. These queries can, of course, be accessed through a variety of portals and access points.

Alternatively, or in addition to the above, the data processing may simply take the form of determining changes in the various data sets for the same target area. Such a determination of changes may occur autonomously, based on pre-programmed algorithms. Suitable analyses of these different data sets can not only determine what has changed for the target area but may also provide insight and/or intelligence about the area. As an example, comparison and analyses of different data sets of the same target area may reveal not just what crops are being planted at what time of year but also what the potential crop yields are for the area. As well differences in population density in a specific urban target area can be detected by suitable analyses and comparisons between differently timed data sets.

In addition to the above, the data gathered by the system may be processed in various ways to gather information and/or intelligence on various areas, locations, and points of interest. As examples, potential levels of commerce can be estimated for a given area through comparison over time of motor vehicle traffic at specific locations, or of airplanes at airports, or ships at ports. Similarly, urban development can be estimated through detecting changes in buildings and roads while illegal forestry can be autonomously detected anywhere in the world. Integrity of utility rights of way or shorelines can be autonomously monitored. Verification and monitoring of carbon credits related to existing or planted trees may also be accomplished using the data gathered and processed by the system. Natural disaster monitoring and response is also possible as all land and coastal areas are automatically collected before a disaster occurs, allowing for increased ability to identify the impacts of such events. Examples of the various uses of the data gathered as well as the various uses of the results of processing that data are provided in Figure 3. The list of fields and uses in those fields provided in Figure 3 is not exhaustive and is only provided as examples that satellite-based imagery, satellite-gathered multispectral data, and the actionable intelligence resulting from the analysis of such data can be used for.

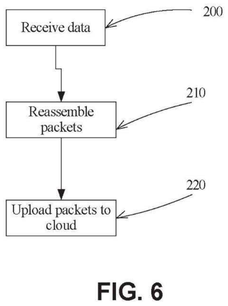

The method according to one aspect of the invention includes the steps detailed in **Figure** 6. The method, in one implementation, is practiced from a ground station. This method begins with step 200, that of receiving data from at least one satellite in orbit. The data may be Earth-derived data and may be packetized to ensure proper data delivery and to ensure the availability of data compression as well as data correction algorithms for the resulting data sets. These packetized data sets are then reassembled to produce the data sets (step 210). The data sets are then uploaded to a cloud-based storage system or a cloud-based database (step 220). The uploaded data can then be analyzed and/or processed accordingly. In some implementations, the method is practiced by a ground station in communication with a cloud-based network. For example, step 200, receiving the data from the satellite may occur at the ground station, as may packetization of the data for transfer. However, data correction and pre-processing the data may be entirely performed using cloud-based servers and processors, after the data has been transferred to the storage system / database.

It should be clear that, while the system and the satellites of the present invention can effectively capture the entire landmass of the earth, in some implementations, only select portions of maritime areas are imaged (e.g., global coastline and up to 20 km seaward and all high interest areas such as the Red Sea, etc.). It should also be clear that, for at least some implementations, maritime imaging will only use a select subset of available EM frequencies as only some frequencies are useful for surveillance of maritime environments (a primary use case). This use of a subset of frequencies may also be done to limit the amount of data collected, as many users may desire or require faster access to less data, rather than slower access to more data. Accordingly, depending on the implementation, comparatively small data packets may be used to download the data from the satellites, as such smaller data packets usually allow for faster downlink speeds and quicker processing times.

In terms of instructions uploaded to satellites, such instructions may be, depending on the configuration, uploaded on a daily or a weekly basis to one or more of the constellations of satellites. Such instructions can be used to adjust the coverage of one or more satellites as the needs of the client/customer(s) change. Alternatively, again depending on configuration, one or more satellites may be programmed at the start of the mission and such programming may last for the length of the mission. For some implementations, the mission may last the entire expected life span of the satellite (*e.g.,* 7 years, 10 years, etc.). Again, depending on the configuration, the different satellites may have different maneuvering capabilities as such maneuvering may be necessary to acquire and maintain a reference orbit or to avoid space debris.

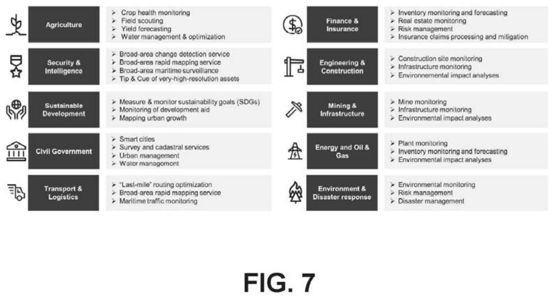

The various aspects of the present invention therefore involve a constellation of satellites that are able to image/cover all areas of the Earth. However, in some embodiments, only specific Areas of Interest identified by customers will be imaged / have data gathered therefrom. The data gathered from the Areas of Interest is then automatically downloaded to the closest specific ground stations of the ground station network, preferably in such a way that raw image/data from satellites can be delivered to a customer within minutes of being gathered. The data downloaded to ground stations are then automatically uploaded to a cloud-based storage solution for further processing. The processing includes the use of AI/ML trained models as well as the use of the data gathered in the training of such AI/ML models. The processing may be accomplished using cloud processing solutions, dedicated servers, or by way of any suitable big data processing assets. The processing preferably provides customers with insights, actionable intelligence, trends, forecasts, etc. in any number of industries/fields as desired or required by the customer. The raw data gathered or the products of such processing of the data can be accessible to customers in any variety of formats and through any number of portals. For some implementations, the data and/or the resulting products from the processing of the data can be accessed by way of portable customer devices (e.g., mobile handsets), dedicated servers, personal computers, or any other suitable manner of accessing communications or data. The resulting products from the processing of the data as well as the raw data gathered can be used to support automated as well as manual decision-making processes. Similarly, the resulting products from the processing of the data and the data gathered can be inserted in any suitable automated or manual workflow as necessary or suitable for a subscribing customer. Some uses of the systems and methods of the present invention are provided in **Figure** 7.

As noted above, the constellation of satellites may comprise 7, 8, 14, or 16 satellites, or any suitable number of satellites. Each of these configurations of satellites may allow for coverage of the Earth as described above (e.g., once every day, once every 2 days, etc). Each of these configurations may be capable of different swath widths, swath configurations, and/or swath control procedures, as also described above. As well, each of these configurations of satellites can communicate with various configurations of GSNs, as outlined above.

It should be clear that various aspects of the present invention may be implemented as software modules in an overall software system. As such, the present invention may thus take the form of computer executable instructions that, when executed, implements various software modules with predefined functions.

Additionally, it should be clear that, unless otherwise specified, any references herein to 'image' or to 'images' refer to a digital image or to digital images, comprising pixels or picture cells. Likewise, any references to an 'audio file' or to 'audio files' refer to digital audio files, unless otherwise specified. 'Video', 'video files', 'data objects', 'data files' and all other such terms should be taken to mean digital files and/or data objects, unless otherwise specified.

Further, it should be clear that any references to 'cloud computing', 'cloud servers', 'cloud processing', 'cloud data processing', 'cloud databases', 'cloud data storage systems', etc. refer to the definition of 'cloud' in the field of data processing.

The expression "at least one of [x] and [y]", as used herein, means and should be construed as meaning "[x], [y], or both [x] and [y]".

Embodiments of the invention may be executed by a computer processor or similar device programmed in the manner of method steps or may be executed by an electronic system which is provided with means for executing these steps. Similarly, an electronic memory means such as computer diskettes, CD-ROMs, Random Access Memory (RAM), Read Only Memory (ROM) or similar computer software storage media known in the art, may be programmed to execute such method steps. As well, electronic signals representing these method steps may also be transmitted via a communication network.

Embodiments of the invention may be implemented in any conventional computer programming language. For example, preferred embodiments may be implemented in a procedural programming language (e.g., "C" or "Go") or an object-oriented language *(e.g.,* "C++", "java", "PHP", "PYTHON" or "C#"). Alternative embodiments of the invention may be implemented as pre-programmed hardware elements, other related components, or as a combination of hardware and software components.

Embodiments can be implemented as a computer program product for use with a computer system. Such implementations may include a series of computer instructions fixed either on a tangible medium, such as a computer readable medium *(e.g.,* a diskette, CD-ROM, ROM, or fixed disk) or transmittable to a computer system, via a modem or other interface device, such as a communications adapter connected to a network over a medium. The medium may be either a tangible medium (e.g., optical or electrical communications lines) or a medium implemented with wireless techniques (e.g., microwave, infrared or other transmission techniques). The series of computer instructions embodies all or part of the functionality previously described herein. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink-wrapped software), preloaded with a computer system *(e.g.,* on system ROM or fixed disk), or distributed from a server over a network *(e.g.,* the Internet or World Wide Web). Of course, some embodiments of the invention may be implemented as a combination of both software (e.g., a computer program product) and hardware. Still other embodiments of the invention may be implemented as entirely hardware, or entirely software (e.g., a computer program product).

A person understanding this invention may now conceive of alternative structures and embodiments or variations of the above all of which are intended to fall within the scope of the invention as defined in the claims that follow.

## Claims

1. A method for managing Earth-derived data, the method comprising:
- receiving packetized Earth-derived data from at least one satellite in orbit;
- uploading said data to a cloud-based database for analysis and distribution;
wherein:
- said at least one satellite is in a low-Earth, sun-synchronous orbit;
- for each area scanned by said at least one satellite, said data is gathered based on a regular schedule, such that each time said data is gathered, said data is gathered from a same altitude, a same angle, a same view towards said area, and a same time of day; and
- said packetized Earth-derived data is received by at least one ground station.

2. The method according to claim 1, further comprising a step of reassembling said data.

3. The method according to claim 1, wherein said at least one satellite comprises a constellation of at least seven satellites, and wherein said at least seven satellites are uniformly distributed around in said orbit, said orbit being in a single orbital plane.

4. The method according to claim 3, wherein said at least seven satellites comprises fourteen operational satellites.

5. The method according to claim 1, wherein said data is provided to an end user on a near real-time basis.

6. The method according to claim 5, wherein a report based on said data is generated within approximately thirty minutes of said data being gathered.

7. The method according to claim 1, wherein a report based on said data is generated within approximately five minutes of said data being gathered.

8. The method according to claim 1, wherein said data comprises data gathered across at least 11 spectral bands.

9. The method according to claim 1, wherein said data is analyzed for reports relating to at least one of:
- agriculture;
- security;
- intelligence;
- transportation industry;
- forestry;
- architecture, engineering and construction;
- mapping;
- trading and finance;
- ESG and carbon monitoring/verification;
- civil government;
- general analytics;
- insurance;
- renewables and energy; and
- climate and disaster response.

10. The method according to claim 1, wherein said data is suitable for use in artificial intelligence/machine learning applications.

11. The method according to claim 1, wherein said data is suitable for use in automated applications involving any of: automated data processing, automated data storage, or automated data analysis.

12. The method according to claim 1, further comprising processing said data using cloud-based processing assets.

13. The method according to claim 1, wherein analysis of said data includes using trained AI/ML models to thereby produce reports relating to one or more Earth regions of interest.

14. The method according to claim 1, wherein said at least one satellite implements swath control procedures to reduce swath overlap.

15. The method according to claim 14, wherein said procedures comprise deactivating at least one area of a sensor on said at least one satellite to thereby prevent image collection by that area of said sensor, and wherein said deactivating is based on a position of the satellite with respect to the Earth.

16. A satellite for use with an Earth-monitoring system, the system comprising:
- a plurality of satellites in low-Earth, sun-synchronous orbit, said plurality of satellites being positioned in a single orbital plane;
- a plurality of ground stations for receiving data from said plurality of satellites;
- a cloud-based database for receiving data from said plurality of ground stations; and
- a cloud-based data processing system for analyzing data from said plurality of ground stations,
wherein, for each area scanned by said satellite, said data is gathered based on a regular schedule, such that each time said data is gathered, said data is gathered from a same altitude, a same angle, a same view towards said area, and a same time of day.

17. The satellite according to claim 16, wherein said plurality of satellites comprises at least seven satellites.

18. The satellite according to claim 17, wherein said at least seven satellites comprises fourteen operational satellites.

19. The satellite according to claim 16, wherein said plurality of satellites are uniformly distributed through the orbit.

20. The satellite according to claim 16, wherein said plurality of satellites comprises a plurality of operational satellites and at least one spare satellite.

21. The satellite according to claim 20, said at least one spare satellite being for replacing at least one of said operational satellites in the event of failure.

22. The satellite according to claim 16, wherein said satellite implements swath control procedures.

23. The satellite according to claim 22, wherein said procedures are implemented for at least one of the following:
- to limit data collection to only areas of interest; and
- to reduce swath overlap.

24. The satellite according to claim 22, wherein said procedures comprise deactivating at least one area of a sensor on said satellite to thereby prevent image collection by that area of said sensor, and wherein said deactivating is based on a position of the satellite with respect to the Earth.

25. The satellite according to claim 22, wherein said procedures comprise adjustment to specific areas of a sensor on said satellite to collect only a subset of spectra on said sensor, wherein said subset is determined based on the position of said satellite with respect to the Earth.

26. The satellite according to claim 16, wherein a ground station network comprising said plurality of ground stations is distributed globally and wherein a location for each ground station is selected based on the characteristics of the orbit of said plurality of satellites.

27. The satellite according to claim 16, wherein a number of said ground stations in said plurality of ground stations is based on a data collection capacity of said plurality of satellites.

28. The satellite according to claim 16, wherein a position of each satellite within said single orbital plane is selected based on a field of view of an optical instrument on said each satellite.

29. The satellite according to claim 16, wherein said satellite has an observation zenith angle of less than 20 degrees.

30. The satellite according to claim 16, wherein said satellite has at least one of a VNIR instrument and a SWIR instrument.

31. The satellite according to claim 16, wherein orbital altitude is selected to avoid mega-constellations.

32. A ground station for use with an Earth-monitoring system, the system comprising:
- a plurality of satellites in low-Earth, sun-synchronous orbit, said plurality of satellites being positioned in a single orbital plane;
- a plurality of ground stations for receiving data from said plurality of satellites, said plurality of ground stations including said ground station;
- a cloud-based database for receiving data from said plurality of ground stations; and
- a cloud-based data processing system for analyzing data from said plurality of ground stations,
wherein, for each area scanned by at least one satellite of plurality of satellites, said data is gathered based on a regular schedule, such that each time said data is gathered, said data is gathered from a same altitude, a same angle, a same view towards said area, and a same time of day. 32. The ground station according to claim 32, wherein said plurality of satellites comprises at least seven satellites.

33. The ground station according to claim 33, wherein said at least seven satellites comprises fourteen operational satellites.

34. The ground station according to claim 32, wherein said plurality of satellites is uniformly distributed through the orbit.

35. The ground station according to claim 32, wherein said plurality of satellites comprises a plurality of operational satellites and at least one spare satellite.

36. The ground station according to claim 35, said at least one spare satellite being for replacing at least one of said operational satellites in the event of failure.

37. The ground station according to claim 32, wherein at least one of said plurality of satellites implements swath control procedures.

38. The ground station according to claim 37, wherein said procedures are implemented for at least one of the following:
- to limit data collection to only areas of interest; and
- to reduce swath overlap.

39. The ground station according to claim 37, wherein said procedures comprise deactivating at least one area of a sensor on said at least one satellite to thereby prevent image collection by that area of said sensor, and wherein said deactivating is based on a position of the satellite with respect to the Earth.

40. The ground station according to claim 37, wherein said procedures comprise adjustment to specific areas of a sensor on said at least one satellite to collect only a subset of spectra on said sensor, wherein said subset is determined based on the position of the satellite with respect to the Earth.

41. The ground station according to claim 32, wherein a ground station network comprising said plurality of ground stations is distributed globally and wherein a location for each ground station is selected based on the characteristics of the orbit of said plurality of satellites.

42. The ground station according to claim 32, wherein a number of said ground stations in said plurality of ground stations is based on a data collection capacity of said plurality of satellites.

43. The ground station according to claim 32, wherein a position of each satellite within said single orbital plane is selected based on a field of view of an optical instrument on said each satellite.

44. The ground station according to claim 32, wherein each satellite in said plurality of satellites has an observation zenith angle of less than 20 degrees.

45. The ground station according to claim 32, wherein each satellite in said plurality of satellites has at least one of a VNIR instrument and a SWIR instrument.

46. The ground station according to claim 32, wherein orbital altitude is selected avoid mega-constellations.
